# EUROPÄISCHE PATENTSCHRIFT

(11) **EP 2 664 704 B1**
(45) Veröffentlichungstag und Bekanntmachung des Hinweises auf die Patenterteilung: **22.10.2014**
(21) Anmeldenummer: 13164417.1
(22) Anmeldetag: 19.04.2013
(51) Int. Cl.: D06F 37/20

(54) **Anlenk-Vorrichtung zum Anlenken eines Reibungs-Dämpfers an eine Waschmaschine**
Joining device for joining a friction damper to a washing machine
Dispositif d'articulation pour articuler un amortisseur de frottement dans un lave-linge

(30) Priorität: 15.05.2012 DE 102012208084
(43) Veröffentlichungstag der Anmeldung: 20.11.2013
(73) Patentinhaber: SUSPA GmbH, 90518 Altdorf (DE)
(72) Erfinder: Kissmann, Eberhard, 92237 Sulzbach-Rosenberg (DE)
(74) Vertreter: Rau, Schneck & Hübner Patentanwälte Rechtsanwälte PartGmbB

(56) Entgegenhaltungen:
- EP-B1- 1 709 233
- WO-A1-99/27175
- DE-A1- 4 105 763

## Beschreibung

Die Erfindung betrifft eine Anlenk-Vorrichtung zum Anlenken eines mindestens eine Anlenk-Öffnung aufweisenden Reibungs-Dämpfers an einem Waschaggregat oder an einem Maschinengestell einer Waschmaschine.

Die EP 1 709 233 B1 offenbart eine derartige Anlenk-Vorrichtung mit einem Träger und einem damit kooperierenden Stützkörper.

Es ist die Aufgabe der vorliegenden Erfindung, eine Anlenk-Vorrichtung derart zu verbessern, dass deren Handhabung vereinfacht ist.

Diese Aufgabe ist durch eine Anlenk-Vorrichtung mit den Merkmalen des Anspruchs 1 in nicht naheliegender Weise gelöst. Der Kern der Erfindung besteht darin, eine Anlenk-Vorrichtung zweiteilig auszuführen, wobei ein Verriegelungs-Teil um eine Verriegelungs-Schwenkachse an einem Träger-Teil schwenkbar angelenkt ist. Die Anlenk-Vorrichtung ist also in sich drehbar. Diese Drehbarkeit in sich ist insbesondere dann vorteilhaft, wenn ein Dämpfer, der mittels der Anlenk-Vorrichtung an einer Waschmaschine befestigt werden soll, derart ausgeführt ist, dass Gehäuse und Stößel zueinander um eine Mittel-Längs-Achse nicht drehbar sind. Dies ist beispielsweise dann der Fall, wenn der Stößel und/oder das Gehäuse eine bezüglich der Mittel-Längs-Achse unrund ausgeführte Kontur aufweisen. Das Verriegelungs-Teil ist zwischen einer Verriegelungs-Position und einer Entriegelungs-Position schwenkbar. In der Verriegelungs-Position ist eine Träger-Platte des Träger-Teils an einem Waschaggregat oder an einem Maschinengestell der Waschmaschine mittels des Befestigungs-Elements befestigt. In der verriegelten Position ist die Anlenk-Vorrichtung an der Waschmaschine fest und zuverlässig befestigt. Gleichzeitig ist ein Reibungs-Dämpfer mit einer Anlenk-Öffnung an einem Zapfen des Träger-Teils gehalten und verriegelt. In der Entriegelungs-Position ist die Träger-Platte an dem Waschaggregat oder an dem Maschinengestell durch das Befestigungs-Element freigegeben. Das bedeutet, dass in der Entriegelungs-Position die Träger-Platte in der Waschmaschine nicht befestigt ist und insbesondere entnommen werden kann. In der Entriegelungs-Position ist es insbesondere möglich, das Träger-Teil beispielsweise zusammen mit dem Verriegelungs-Teil zu demontieren. Die Handhabung der Anlenk-Vorrichtung insbesondere hinsichtlich der Montage und Demontage in der Waschmaschine ist vereinfacht.

Eine Anlenk-Vorrichtung nach Anspruch 2 ist besonders vorteilhaft in der Handhabung. Insbesondere ist es möglich, die Anlenk-Vorrichtung manuell und insbesondere ohne Werkzeug zu betätigen. Dadurch, dass das Verriegelungs-Teil einen angeformten Hebel aufweist, der quer und insbesondere senkrecht zu der Verriegelungs-Schwenkachse orientiert ist, ist es besonders vorteilhaft möglich, ein Schwenk-Drehmoment manuell auf das Verriegelungs-Teil auszuüben.

Eine Anlenk-Vorrichtung nach Anspruch 3 ist unkompliziert und insbesondere in großen Mengen kostengünstig herstellbar. Die Anlenk-Vorrichtung eignet sich besonders zur Anwendung in Waschmaschinen, die in großen Stückzahlen hergestellt werden. Eine schnelle und kostengünstige Montage der Dämpfer in die Waschmaschine ist damit möglich. Insbesondere wird das Verriegelungs-Teil aus Kunststoff und insbesondere in einem Spritzguss-Verfahren hergestellt. Die Herstellung des Verriegelungs-Teils durch Spritzguss ermöglicht eine große Gestaltungsvielfalt. Insbesondere ist es möglich, verschiedene Funktionselemente an dem Verriegelungs-Teil zu integrieren. Das Verriegelungs-Teil ist einstückig hergestellt. Dadurch weist das Verriegelungs-Teil eine hohe Eigenstabilität auf. Es ist nicht erforderlich, das Verriegelungs-Teil, beispielsweise in einem vorgelagerten Montageschritt, zusammenzufügen. Die Herstellung der Anlenk-Vorrichtung, und insbesondere deren Montage, ist dadurch zusätzlich vereinfacht.

Eine Anlenk-Vorrichtung nach Anspruch 4 mit einem einstückig hergestellten Träger-Teil ermöglicht eine vereinfachte Herstellung des Träger-Teils und insbesondere eine unkomplizierte Montage der Anlenk-Vorrichtung. Darüber hinaus weist das einstückige Träger-Teil eine erhöhte Eigenstabilität und Steifigkeit auf. Das Träger-Teil ist insbesondere aus Kunststoff und insbesondere im Spritzguss-Verfahren hergestellt. Hieraus ergeben sich die identischen Vorteile wie bei der Herstellung des Verriegelungs-Teils im Spritzgussverfahren, worauf hiermit verwiesen wird.

Eine Anlenk-Vorrichtung nach Anspruch 5 weist ein verbessertes Schallabsorptionsverhalten auf. Dadurch, dass die beiden die Anlenk-Vorrichtung bildenden Teile aus unterschiedlichen Materialien hergestellt sind, ist eine Schallemission, insbesondere durch Körperschal, reduziert. Geräusche durch Relativbewegungen zwischen den beiden Teilen werden vermieden.

Eine Anlenk-Vorrichtung nach Anspruch 6 ermöglicht eine verbesserte Befestigung des Träger-Teils an der Waschmaschine, insbesondere an dem Waschaggregat oder an dem Maschinengestell. Insbesondere sind an der Träger-Platte zwei Halte-Vorsprünge vorgesehen, mit welchen die Träger-Platte in einer Verriegelungs-Position gegen ein entsprechend korrespondierendes Teil der Waschmaschine gedrückt wird. Die zwei Halte-Vorsprünge dienen als Positionier- und Verdrehsicherung der von der Anlenk-Vorrichtung und dem Dämpfer gebildeten Baugruppe gegenüber einer in der Waschmaschine vorgesehenen Halterung zur Aufnahme der Baugruppe. Insbesondere ist es möglich, an der Träger-Platte Verstärkungs-Rippen vorzusehen, so dass die Steifigkeit und Stabilität der Träger-Platte und damit des Träger-Teils insgesamt erhöht ist. Insbesondere ist die Übertragung von Körperschall von dem Reibungs-Dämpfer über das Träger-Teil reduziert.

Eine Anlenk-Vorrichtung nach Anspruch 7 weist eine vorteilhafte Montierbarkeit des Träger-Teils mit dem Verriegelungs-Teil auf. Dadurch, dass das Befestigungs-Element in einer Ausnehmung der Träger-Platte angeordnet ist, dient die Ausnehmung als Schwenkaufnahme. Die Ausnehmung weist eine zu einer von der Träger-Platte vorgegebene Ebene parallel angeordnete Kontur auf, die im Wesentlichen schlüssellochförmig ausgeführt ist. Die Kontur ist zu einem Rand der Träger-Platte hin offen, so dass das Befestigungs-Element in die Ausnehmung der Träger-Platte eingeführt werden kann. Die Kontur der Ausnehmung weist einen zumindest abschnittsweise kreisbogenförmigen Abschnitt und einen Einführ-Abschnitt auf, wobei eine Breite des Einführ-Abschnittes kleiner ist als ein Durchmesser des kreisbogenförmigen Abschnitts.

Eine Anlenk-Vorrichtung nach Anspruch 8 ermöglicht eine gesicherte Montage des Verriegelungs-Teils an dem Träger-Teil. Dadurch, dass das Befestigungs-Element eine Axial-Sicherung aufweist, ist ausgeschlossen, dass das Verriegelungs-Teil in einer Richtung senkrecht zur Träger-Platte unbeabsichtigt verlagert wird. Insbesondere ist es dadurch möglich, die Anlenk-Vorrichtung in einem vormontierten Zustand, in dem das Verriegelungs-Teil an dem Träger-Teil gehalten ist, in der Waschmaschine anzubringen. Insbesondere ist es möglich, dass die Anlenk-Vorrichtung mit einem daran vormontierten Reibungs-Dämpfer in die Waschmaschine eingeführt und dort befestigt und verriegelt wird.

Eine Anlenk-Vorrichtung nach Anspruch 9 ermöglicht eine gesicherte Anordnung des Verriegelungs-Teils an dem Träger-Teil in der Verriegelungs-Position. Dadurch wird vermieden, dass die Anlenk-Vorrichtung unbeabsichtigt aus der Verriegelungs-Position gelöst wird. Insbesondere ist dies durch das mindestens eine Rast-Element gewährleistet, das in der Verriegelungs-Position in einer verrasteten Position angeordnet ist.

Eine Anlenk-Vorrichtung nach Anspruch 10 ermöglicht zudem eine axiale Sicherung des Reibungs-Dämpfers an dem Zapfen entlang der Zapfen-Längsachse.

Eine Anlenk-Vorrichtung nach Anspruch 11 gewährleistet eine hohe Verriegelungs-Sicherheit. Dadurch, dass ein zweites Rast-Element in eine in der Träger-Platte angeordnete zweite Rast-Ausnehmung in der Verriegelungs-Position einrastet, ist die Stabilität der Anlenk-Vorrichtung zusätzlich erhöht. Ein Öffnen des Verriegelungs-Teiles wird verhindert.

Eine Anlenk-Vorrichtung nach Anspruch 12 ermöglicht ein manuelles Lösen der Anordnung des zweiten Rast-Elements aus der verrasteten Anordnung. Dazu weist das zweite Rast-Element einen Rast-Vorsprung auf, der an einer federnden Rast-Zunge angelenkt ist. Die Rast-Zunge ist derart manuell betätigbar, dass der Rast-Vorsprung aus der zweiten Rast-Ausnehmung verlagert werden kann. Insbesondere ist die Rast-Zunge derart ausgeführt, dass in der Verriegelungs-Position die Rast-Zunge zumindest abschnittsweise seitlich an der Träger-Platte übersteht und somit manuell, insbesondere durch Drücken der Rast-Zunge entlang einer zur Verriegelungs-Schwenkachse parallelen Richtung, betätigbar ist.

Eine Anlenk-Vorrichtung nach Anspruch 13 ermöglicht eine zusätzliche Sicherung des Verriegelungs-Teils an dem Träger-Teil in der Verriegelungs-Position. Mittels einer exzentrisch zur Verriegelungs-Schwenkachse angeordneten Halte-Platte, die eine Zapfen-Klammer aufweist, kann die Halte-Platte mit der Zapfen-Klammer in der Verriegelungs-Position den Zapfen zumindest abschnittsweise umgreifen. Dabei ist die Zapfen-Klammer insbesondere C-förmig ausgeführt, wobei insbesondere eine Öffnung des "C" kleiner ist als ein Außendurchmesser des Zapfens. Insbesondere ist die Halte-Platte also auf den Zapfen in der Verriegelungs-Position aufgerastet. In der Entriegelungs-Position ist die Zapfen-Klammer beabstandet von dem Zapfen angeordnet. Dadurch ist insbesondere die Montage des Reibungs-Dämpfers auf dem Zapfen ermöglicht. Die Zapfen-Klammer gewährleistet eine zusätzliche axiale Sicherung des Reibungs-Dämpfers auf dem Zapfen.

Eine Anlenk-Vorrichtung nach Anspruch 14 ermöglicht eine vereinfachte Befestigung des Befestigungs-Elements in der Waschmaschine. Insbesondere ist auch eine erhöhte Festigkeit der Anordnung des Befestigungs-Elements in einer Ausnehmung der Waschmaschine gegeben.

Eine Anlenk-Vorrichtung nach Anspruch 15 ermöglicht eine unkomplizierte und zuverlässige Befestigung der Anlenk-Vorrichtung in der Waschmaschine. Insbesondere ist eine Drehung des Verriegelungs-Elements um 90° um eine Bolzen-Längsachse ausreichend, um das als Bajonett-Bolzen ausgeführte Befestigungs-Element an dem Träger-Teil zu verriegeln.

Einzelheiten der Erfindung ergeben sich aus der Beschreibung eines Ausführungsbeispiels anhand der Zeichnung. Es zeigen:
- Fig. 1: eine geschnittene Seitenansicht einer Waschmaschine mit zwei jeweils zwischen einem Maschinengestell und einem Waschaggregat angeordneten Reibungs-Dämpfern,
- Fig. 2: eine vergrößerte, perspektivische Ausschnittsdarstellung einer erfindungsgemäßen Anlenk-Vorrichtung mit einem daran angelenkten Reibungs-Dämpfer in einer Entriegelungs-Position,
- Fig. 3: eine Schnittdarstellung gemäß Linie III-III in Fig. 2,
- Fig. 4: eine Fig. 2 entsprechende perspektivische Darstellung in einer Verriegelungs-Position der Anlenk-Vorrichtung,
- Fig. 5: eine Schnittdarstellung gemäß Linie V-V in Fig. 4,
- Fig. 6: eine perspektivische Darstellung eines Träger-Teils der erfindungsgemäßen Anlenk-Vorrichtung und
- Fig. 7: eine perspektivische Darstellung eines Verriegelungs-Teils der erfindungsgemäßen Anlenk-Vorrichtung.

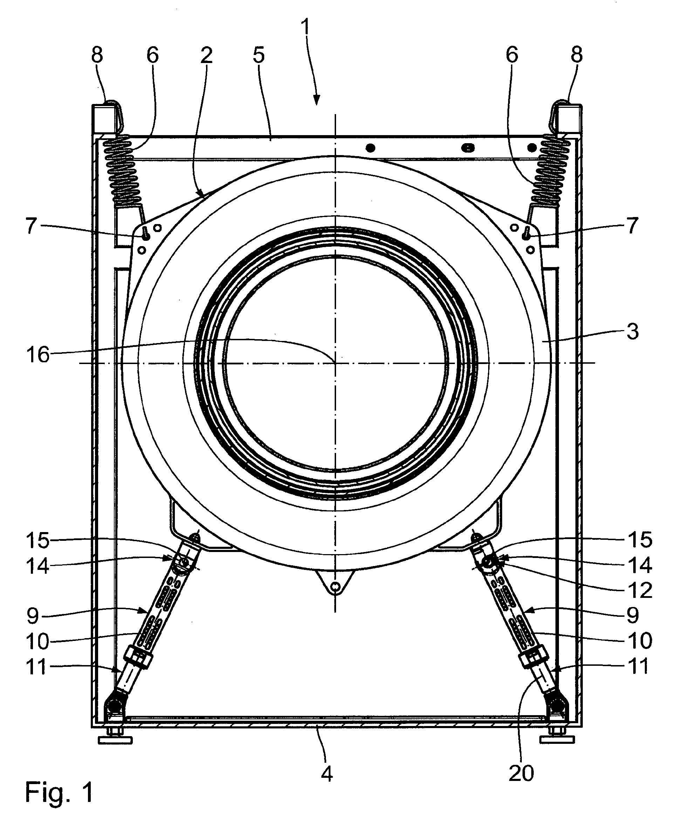

Eine in Fig. 1 dargestellte Trommelwaschmaschine 1 weist ein schwingungsfähiges Waschaggregat 2 mit einem entsprechenden Gehäuse 3 auf.

In dem Gehäuse 3 ist eine im Einzelnen nicht dargestellte Waschtrommel drehantreibbar gelagert. Das schwingungsfähige Waschaggregat 2 ist an einem auf einem durch einen Grundrahmen gebildeten Maschinengestell 4 abgestützten Waschmaschinen-Gehäuse 5 mittels Schrauben-Zugfedern 6 aufgehängt. Die Zugfedern 6 sind einerseits an Ösen 7 angebracht, die im oberen Bereich des Waschaggregats 2 befestigt sind. Andererseits sind die Zugfedern 6 an Ösen aufgehängt, die an Profil-Rohren 8 des Waschmaschinen-Gehäuses 5 ausgebildet sind. Das Waschaggregat 2 ist frei schwingungsfähig aufgehängt bzw. abgestützt. Anstelle der Zugfedern 6 kann das Waschaggregat 2 auch mittels sogenannter Federbeine auf dem Maschinengestell 4, wie beispielsweise aus der EP 0 108 217 B1 bekannt, abgestützt sein.

Zwischen dem Waschaggregat 2 und dem Maschinengestell 4 sind weiterhin Reibungs-Dämpfer 9 angeordnet. Ein derartiger Reibungs-Dämpfer 9 ist beispielsweise aus der EP 0 336 176 B1 bekannt. Jeder Reibungs-Dämpfer 9 weist ein Gehäuse 10 und eine aus dem Gehäuse 10 herausgeführten Stößel 11 auf. Der Stößel 11 und das Gehäuse 10 haben jeweils einen zu einer Mittel-Längs-Achse 20 senkrecht orientierten rechteckförmigen Querschnitt. Der Stößel 11 ist gegenüber dem Gehäuse 10 um die Mittel-Längs-Achse 20 nicht drehbar. Sowohl das Gehäuse 10 als auch der Stößel 11 weisen jeweils an einem freien Ende eine Anlenk-Öffnung 12 auf, in die eine Gelenk-Büchse in Form einer Gummi-Hülse 13 eingesetzt ist. Die Reibungs-Dämpfer 9 sind mittels einer Anlenk-Vorrichtung 14 an dem Gehäuse 3 des Waschaggregats 2 so angebracht, dass der jeweilige Reibungs-Dämpfer 9 um eine Drehachse 15 relativ zu dem Waschaggregat 2 schwenkbar gelagert ist. Es ist alternativ oder zusätzlich möglich, die Reibungs-Dämpfer 9 jeweils mittels einer weiteren Anlenk-Vorrichtung 14 an dem Maschinengestell 4 zu befestigen. Es ist auch möglich, dass ein Reibungs-Dämpfer 9 mittels der Anlenk-Vorrichtung 14 an dem Waschaggregat 2 und der andere Reibungs-Dämpfer 9 mittels der Anlenk-Vorrichtung 14 an dem Maschinengestell 4 befestigt ist. Die Drehachse 15 ist parallel zu einer Trommel-Drehachse 16 orientiert.

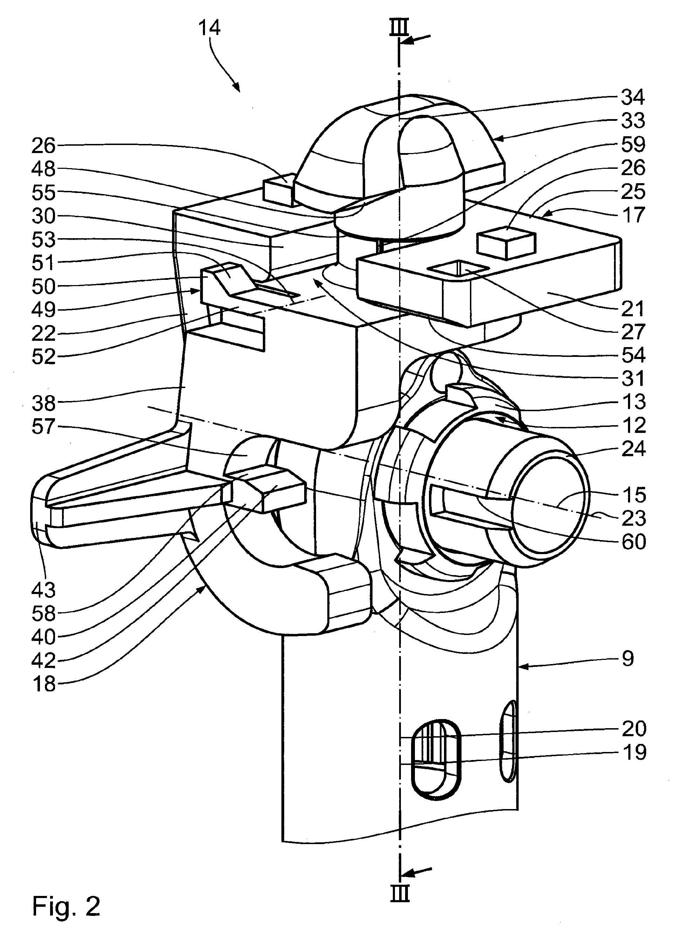

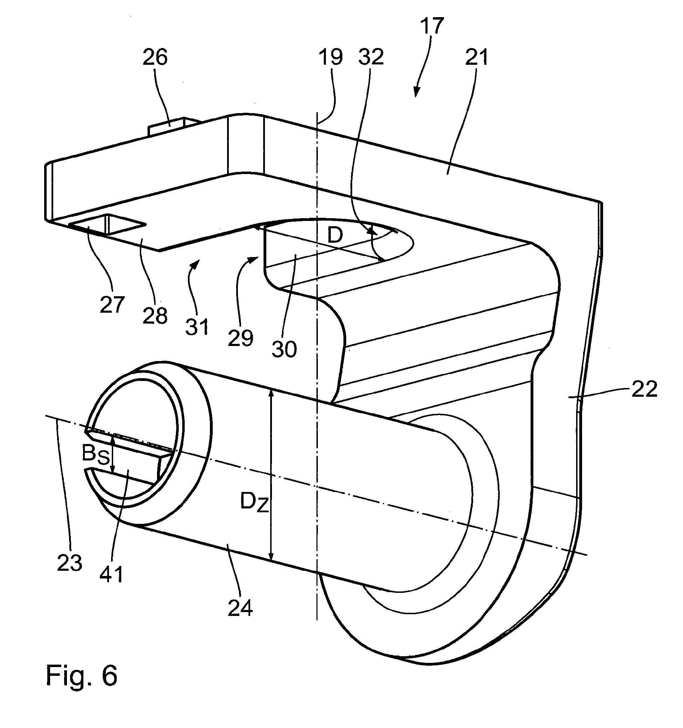

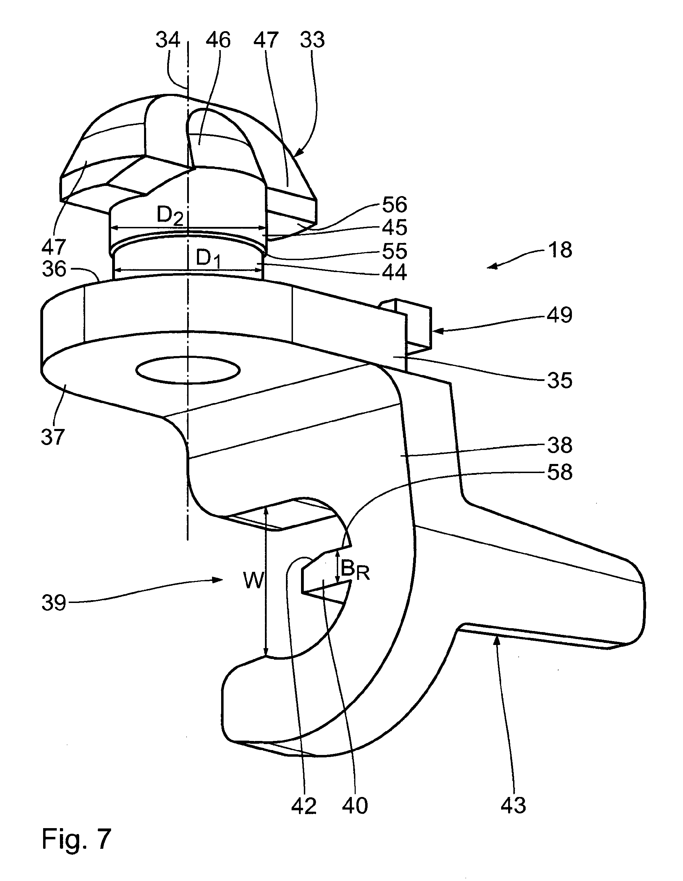

Im Folgenden wird die Anlenk-Vorrichtung 14 anhand der Fig. 2 bis 7 näher beschrieben. Die Anlenk-Vorrichtung 14 umfasst ein Träger-Teil 17 zum Aufnehmen des Reibungs-Dämpfers 9. Weiterhin umfasst die Anlenk-Vorrichtung 14 ein Verriegelungs-Teil 18, das um eine Verriegelungs-Schwenkachse 19 an dem Träger-Teil 17 schwenkbar angelenkt ist. Das Verriegelungs-Teil 18 dient zum Verriegeln des Reibungs-Dämpfers 9 an dem Träger-Teil 17. Gleichzeitig dient das Verriegelungs-Teil 18 zum Befestigen der Anlenk-Vorrichtung 14 an dem Waschaggregat 2. In einem in die Waschmaschine 1 eingebauten Zustand des Reibungs-Dämpfers 9 fällt die Mittel-Längs-Achse 20 mit der Verriegelungs-Schwenkachse 19 zusammen. Die Mittel-Längs-Achse 20 des Reibungs-Dämpfers 9 ist insbesondere senkrecht zu den Drehachsen 15 orientiert.

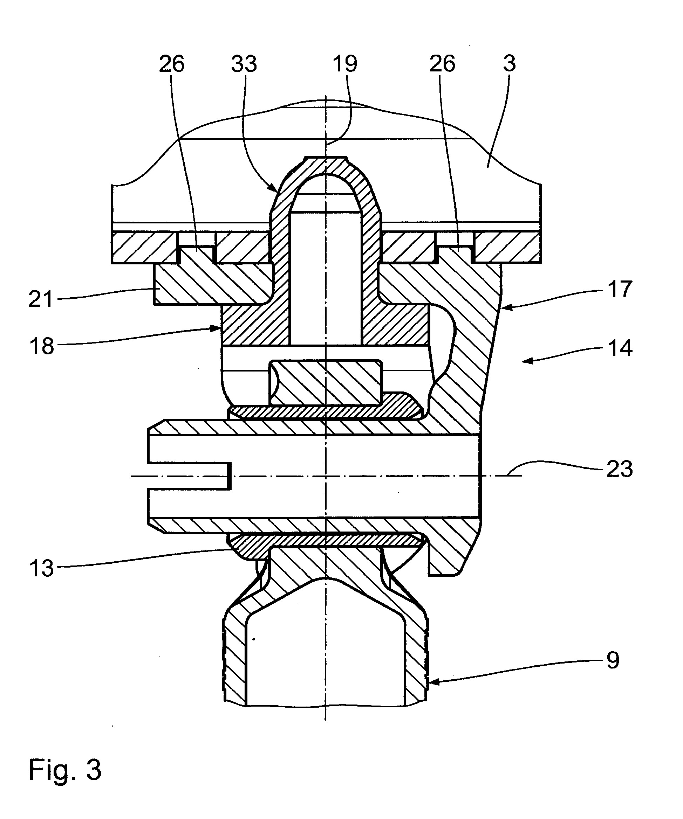

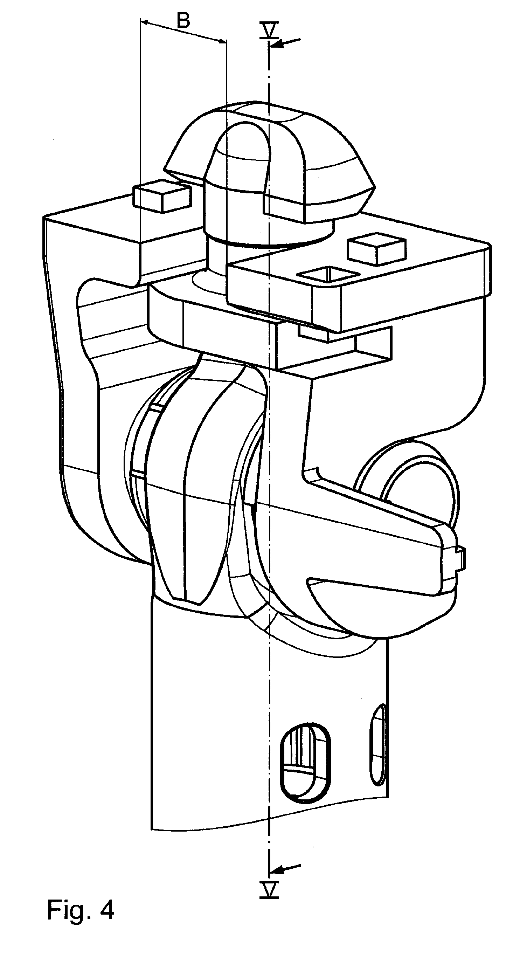

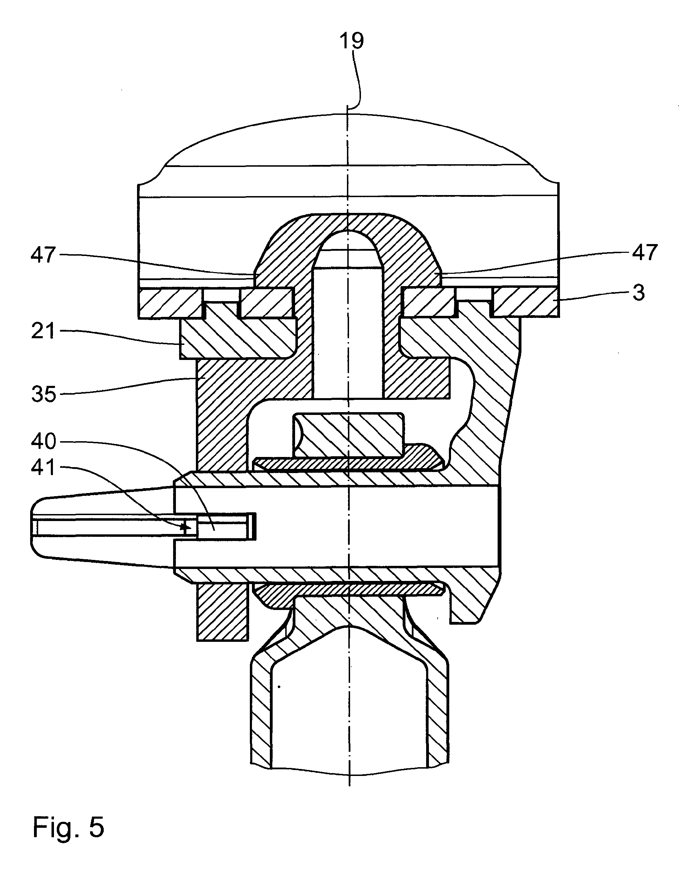

Das Verriegelungs-Teil 18 ist an dem Träger-Teil 17 um die Verriegelungs-Schwenkachse 19 zwischen einer in Fig. 2, 3 dargestellten Entriegelungs-Position und einer in Fig. 4, 5 dargestellten Verriegelungs-Position der Anlenk-Vorrichtung 14 schwenkbar.

Im Folgenden wird das Träger-Teil 17 näher beschrieben. Das Träger-Teil 17 ist im Wesentlichen U-förmig ausgeführt. Das Träger-Teil 17 dient zum Aufnehmen und Tragen des Reibungs-Dämpfers 9. Das Träger-Teil 17 umfasst eine insbesondere im Wesentlichen eben ausgeführte Träger-Platte 21 zum Anlegen an das Gehäuse 3 des Waschaggregats 2. Weiterhin weist das Träger-Teil 17 eine sich quer und insbesondere senkrecht von der Träger-Platte 21 wegerstreckende Träger-Wand 22 auf. An der Träger-Wand 22 ist ein eine Zapfen-Längsachse 23 aufweisender Zapfen 24 angeformt. Der Zapfen 24 dient zur Aufnahme in der Anlenk-Öffnung 12 des Reibungs-Dämpfers 9. Der Zapfen 24 erstreckt sich senkrecht von der Träger-Wand 22. Insbesondere ist die Zapfen-Längsachse 23 parallel zu einer von der Träger-Platte 21 definierten Ebene angeordnet. Der Zapfen 24 weist einen senkrecht zur Zapfen-Längsachse 23 orientierten Ring-Querschnitt auf. In einem vorderen, der Träger-Wand 22 abgewandten Bereich, ist eine kegelstumpfförmige Einführ-Fläche vorgesehen, um das Einführen des Zapfens 24 in die Anlenk-Öffnung 12 des Reibungs-Dämpfers 9 zu erleichtern. Das Träger-Teil 17 ist einstückig beispielsweise aus Polypropylen (PP) oder Polyoxymethylen (POM) beispielsweise mittels eines Spritzguss-Verfahrens hergestellt.

An einer dem Zapfen 24 abgewandten Oberseite 25 der Träger-Platte 21 sind zwei quaderförmige Halte-Vorsprünge 26 vorgesehen. Die Halte-Vorsprünge 26 sind starr auf der Träger-Platte 21 angeordnet. Dadurch ist ein verbesserter Halt des Träger-Teils 17 an dem Gehäuse 3 des Waschaggregats 2 möglich. Die Halte-Vorsprünge 26 dienen als Positionier- und Verdrehsicherung der Anlenk-Vorrichtung 14 an der Waschmaschine 1. Mit der Oberseite 25 wird das Träger-Teil 17 gegen das Gehäuse 3 des Waschaggregats 2 gedrückt, worauf später im Einzelnen noch eingegangen wird. In einer zur Verriegelungs-Schwenkachse 19 senkrecht orientierten Ebene weisen die Halte-Vorsprünge 26 jeweils einen quadratischen Querschnitt auf. Es sind auch andere Querschnitte für die Halte-Vorsprünge 26 möglich.

In der Träger-Platte 21 und/oder in der Träger-Wand 22 können jeweils eine oder mehrere jeweils senkrecht zu einer Plattenebene bzw. Wandebene orientierte Verstärkungs-Rippen vorgesehen sein, um die Strukturstabilität des Träger-Teils 17 zu erhöhen.

Weiterhin ist in der Träger-Platte 21 eine zweite Rast-Ausnehmung 27 vorgesehen. Die zweite Rast-Ausnehmung 27 durchdringt insbesondere vollständig die Träger-Platte 21. Es ist auch denkbar, die zweite Rast-Ausnehmung 27 derart auszuführen, dass sie zu der Oberseite 25 hin geschlossen ist. Insbesondere von einer der Oberseite 25 gegenüberliegend angeordneten Unterseite 28 ist die zweite Rast-Ausnehmung 27 offen gestaltet. Insbesondere im Bereich der zweiten Rast-Ausnehmung 27 weist die Träger-Platte 21 eine abgerundete oder abgeflachte Kante 54 auf.

In der Träger-Platte 21 ist weiterhin eine im Wesentlichen schlüssellochförmige Ausnehmung 29 vorgesehen. Die Ausnehmung 29 weist einen zwei zueinander parallel angeordnete Seitenwände 30 aufweisenden Einführ-Abschnitt 31 sowie einen die Seitenwände 30 miteinander verbindenden Kreisbogen-Abschnitt 32 auf. Eine Breite B des Einführ-Abschnitts 31 entspricht einem senkrechten Abstand der beiden gegenüberliegenden Seitenwände 30. Die Breite B des Einführ-Abschnitts 31 ist kleiner als ein Durchmesser des Kreisbogen-Abschnitts 32.

Im Folgenden wird das Verriegelungs-Teil 18 näher beschrieben. Das Verriegelungs-Teil 18 weist ein Befestigungs-Element 33 in Form eines eine Bolzen-Längsachse 34 aufweisenden Bajonett-Bolzens auf. Der Bajonett-Bolzen 33 ist auf einer Dreh-Platte 35 angeordnet und erstreckt sich im Wesentlichen senkrecht davon entlang der Bolzen-Längsachse 34. Das Verriegelungs-Teil 18 ist einstückig beispielsweise aus Polypropylen (PP) oder Polyoxymethylen (POM), insbesondere in einem Spritzgussverfahren hergestellt.

Das Befestigungs-Element 33 ist an einer Oberseite 36 der Dreh-Platte 35 angeformt. An einer der Oberseite 36 gegenüberliegend angeordneten Unterseite 37 der Dreh-Platte 35 ist eine Halte-Platte 38 angeformt, die sich senkrecht von der Dreh-Platte 35 weg erstreckt. Die Halte-Platte 38 ist exzentrisch zur Bolzen-Längsachse 34 an dem Verriegelungs-Teil 18 vorgesehen. Die Halte-Platte 38 weist eine Zapfen-Klammer 39 auf, die im Wesentlichen C-förmig ausgeführt ist, wobei eine Öffnungs-Weite W des "C" kleiner ist als ein Durchmesser eines Rundabschnitts 57 des "C". Insbesondere ist die Öffnungs-Weite W kleiner als ein Zapfen-Durchmesser D_{z} des Zapfens 24. An dem Rundabschnitt 57 des "C" ist ein erstes Rast-Element 40 vorgesehen, das in einer korrespondierenden, in dem Zapfen 24 angeordneten, ersten Rast-Ausnehmung 41 rastend anordenbar ist. Die erste Rast-Ausnehmung 41 ist als schlitzförmige Öffnung an einer äußeren Zylinder-Mantelfläche des Zapfens 24 vorgesehen. Die erste Rast-Ausnehmung 41 weist eine Längsorientierung auf, die parallel zur Zapfen-Längsachse 23 orientiert ist. Senkrecht zu der Längsorientierung hat der Schlitz eine Breite B_{S}. Das erste Rast-Element 40 weist eine Breite B_{R} auf, die kleiner ist als die Schlitzbreite Bₛ. Um ein Einführen des ersten Rast-Elements 40 in die erste Rast-Ausnehmung 41 zu erleichtern, ist an einer der Öffnung des "C" zugewandten Vorderseite des ersten Rast-Elements 40 eine Einführflanke 42 vorgesehen. An einer oberen, der Dreh-Platte 35 zugewandten Oberseite weist das erste Rast-Element 40 eine Kontaktfläche 58 auf.

An dem Verriegelungs-Teil 18 ist ein Hebel 43 einstückig angeformt. Der Hebel 43 ermöglicht das Schwenken des Verriegelungs-Teils 18 um die Verriegelungs-Schwenkachse 49. Der Hebel 43 erstreckt sich quer, insbesondere senkrecht zu der Verriegelungs-Schwenkachse 19.

Der Bajonett-Bolzen 33 weist eine senkrecht zur Bolzen-Längsachse 34 orientierte runde Querschnittsform auf. Der Bajonett-Bolzen 33 umfasst einen Dreh-Abschnitt 44, an den sich entlang der Bolzen-Längsachse 34 ein Befestigungs-Abschnitt 45 anschließt. Der Dreh-Abschnitt 44 weist einen senkrecht zur Bolzen-Längsachse 34 orientierten ersten Durchmesser D₁ auf. Der Befestigungs-Abschnitt 45 weist einen senkrecht zur Bolzen-Längsachse 34 orientierten zweiten Durchmesser D₂ auf, der größer ist als der erste Durchmesser D₁. Insbesondere gilt: D₂ ≥ 1,05 ·D₁.

An den Befestigungs-Abschnitt 45 schließt sich entlang der Bolzen-Längsachse 34 ein an sich bekannter Bajonett-Abschnitt 46 an. Der Bajonett-Abschnitt 46 zeichnet sich im Wesentlichen dadurch aus, dass er zwei diametral bezüglich der Bolzen-Längsachse 34 gegenüberliegende Bajonett-Stege 47 aufweist. Jeder Bajonett-Steg 47 weist jeweils eine Einführ-Schräge 48 auf, die an einer Unterseite des Bajonett-Stegs 47 angeordnet ist. Die Einführ-Schrägen 48 sind der Oberseite 36 der Dreh-Platte 35 zugewandt.

Das Verriegelungs-Teil 18 weist ein zweites Rast-Element 49 auf, das einstückig an der Dreh-Platte 35 angeformt ist. Das zweite Rast-Element 49 ist als Rast-Vorsprung 50 mit einer Einführ-Schräge 51 ausgeführt. Der Rast-Vorsprung 50 ist an einer federnden Rast-Zunge 52 angeordnet. Die federnde Ausgestaltung der Rast-Zunge 52 ergibt sich dadurch, dass diese durch einen die Dreh-Platte 35 durchdringenden Schlitz getrennt ist. Entsprechend resultiert ein Feder-Gelenk 53, das senkrecht zu dem Schlitz orientiert und an einem Ende des Schlitzes angeordnet ist. Um das Feder-Gelenk 53 kann die Rast-Zunge 52 federnd geschwenkt werden. An einer der Einführ-Schräge 51 abgewandten Rückseite des Rast-Vorsprungs 50 kann das zweite Rast-Element 49 einen nicht dargestellten Griff-Abschnitt derart aufweisen, dass das zweite Rast-Element 49 manuell betätigbar ist, wenn es in der dazu korrespondierenden zweiten Rast-Ausnehmung 27 rastend angeordnet ist, also wenn sich die Anlenk-Vorrichtung 14 in der Verriegelungs-Position befindet.

An dem Dreh-Abschnitt 44 ist eine bezüglich der Verriegelungs-Schwenkachse 19 radial vorstehende Arretierungs-Rippe 59 vorgesehen. Die Arretierungs-Rippe 59 erstreckt sich parallel zur Verriegelungs-Schwenkachse 19 an der äußeren Zylinder-Mantelfläche des Dreh-Abschnitts 44. Die Arretierungs-Rippe 59 stellt eine radiale Ausbuchtung im Bereich des Dreh-Abschnitts 44 dar. Durch die Arretierungs-Rippe 59 ist der erste Durchmesser D₁ vergrößert. Insbesondere ist die Arretierungs-Rippe 59 derart gestaltet, dass die Kontur der Arretierungs-Rippe 59 mit der Zylinder-Mantelfläche des Befestigungs-Abschnitts 45 fluchtet. Die Arretierungs-Rippe 59 ist bezüglich ihrer Umfangsposition an dem Dreh-Abschnitt 44 derart angeordnet, dass sie beim Drehen des Verriegelungs-Teils 18 an dem Träger-Teil 17 einen zusätzlichen Widerstand aufgrund der radialen Verdickung des Dreh-Abschnitts 44 darstellt. Die Arretierungs-Rippe ermöglicht eine zusätzliche Arretierung des Verriegelungs-Teils 18 an dem Träger-Teil 17. Insbesondere während eines Transports der gesamten Baugruppe, die aus der Anlenk-Vorrichtung 14 und einem daran befestigten Dämpfer 9 besteht, ist die Anlenk-Vorrichtung 14 sicher arretiert. Die Arretierungs-Rippe ist in Fig. 2 abschnittsweise zu sehen.

Im Folgenden wird die Montage des Verriegelungs-Teils 18 an dem Träger-Teil 17 zur Bildung der zweiteiligen Anlenk-Vorrichtung 14 näher erläutert. Das Verriegelungs-Teil 18 wird mit dem Befestigungs-Element 33 im Bereich des Einführ-Abschnitts 31 der Ausnehmung 29 an der Träger-Platte 21 des Träger-Teils 17 angeordnet. Der erste Durchmesser D₁ des Befestigungs-Elements 33 im Bereich des Dreh-Abschnitts 44 ist größer als die Breite B des Einführ-Abschnitts 31. Aufgrund des elastischen Materialverhaltens des Kunststoff-Materials, aus dem das Träger-Teil 17 hergestellt ist, ist es möglich, das Befestigungs-Element mit dem Dreh-Abschnitt 44 entlang des Einführ-Abschnitts 31 in die Ausnehmung 29 einzuführen, bis das Befestigungs-Element mit dem Dreh-Abschnitt 44 in dem Kreisbogen-Abschnitt 32 der Ausnehmung 29 angeordnet ist. Der Durchmesser D des Kreisbogen-Abschnitts 32 entspricht im Wesentlichen dem ersten Durchmesser D₁ des Dreh-Abschnitts 44. Das Verriegelungs-Teil 18 ist mit dem Dreh-Abschnitt 44 des Befestigungs-Elements 33 in der Ausnehmung 29 der Träger-Platte 21 schwenkbar um die Bolzen-Längsachse 34 angelenkt. In der montieren Anordnung der Anlenk-Vorrichtung 14 fallen die Verriegelungs-Schwenkachse 19 des Träger-Teils 17 und die Bolzen-Längsachse 34 des Verriegelungs-Teils 18 zusammen.

Der zweite Durchmesser D₂ des Befestigungs-Abschnitts 45 ist größer als der Durchmesser des Kreisbogen-Abschnitts 32 der Ausnehmung 29. Das bedeutet, dass das Befestigungs-Element 33 mit einer entlang der Bolzen-Längsachse 34 zwischen dem Dreh-Abschnitt 44 und dem Befestigungs-Abschnitt 45 angeordneten ringförmigen Schulter 55 auf der Oberseite 25 der Träger-Platte 21 aufliegt. Die Schulter 55 bildet eine Axial-Sicherung zur axialen Halterung des Befestigungs-Elements 33 in einer zu der Träger-Platte 21 senkrecht orientierten Richtung, insbesondere entlang der Bolzen-Längsachse 34.

Dadurch, dass das Verriegelungs-Teil 18 am Dreh-Abschnitt 44 mit dem Befestigungs-Element 33 auf die Träger-Platte 21 des Träger-Teils 17 aufgeschnappt wird, ist das Verriegelungs-Teil 18 sicher und gleichzeitig schwenkbar an dem Träger-Teil 17 gehalten.

Im Folgenden wird die Montage und Funktionsweise der Anlenk-Vorrichtung 14 an dem Gehäuse 3 des Waschaggregats 2 näher erläutert. Die Montage der Anlenk-Vorrichtung 14 an dem Maschinengestell 4 erfolgt analog und wird deshalb nicht im Einzelnen erläutert.

In den Fig. 2 und 3 ist die Anlenk-Vorrichtung 14 in der Entriegelungs-Position dargestellt. Aus Gründen der Übersichtlichkeit ist in Fig. 2 das Gehäuse 3 des Waschaggregats 2 nicht dargestellt. Die Befestigung der Anlenk-Vorrichtung 14 an dem Gehäuse 3 geht insbesondere aus der Schnittdarstellung in Fig. 3 hervor. Das Träger-Teil 17 ist mit der Träger-Platte 21 an dem Gehäuse 3 angelegt, wobei die Halte-Vorsprünge 26 in dafür vorgesehene Ausnehmungen des Gehäuses 3 eingreifen. Gleichzeitig ragt das Befestigungs-Element 33 des Verriegelungs-Teils 18 durch die Ausnehmung 29 in der Träger-Platte 21 des Träger-Teils 17 durch eine dafür vorgesehene Ausnehmung in dem Gehäuse 3. In dieser Anordnung ist die Anlenk-Vorrichtung 14 mit dem Reibungs-Dämpfer 9 entlang der Verriegelungs-Schwenkachse 19 nicht gesichert.

Eine Verriegelung des Verriegelungs-Teils 18 an dem Träger-Teil 17 und eine gleichzeitige Befestigung der Anlenk-Vorrichtung 14 an dem Gehäuse 3 des Waschaggregats 2 erfolgt durch eine Verlagerung der Anlenk-Vorrichtung 14 von der in Fig. 2, 3 dargestellten Entriegelungs-Position in die in Fig. 4, 5 dargestellte Verriegelungs-Position. Dazu wird das Verriegelungs-Teil 18 etwa um 90° um die Verriegelungs-Schwenkachse 19 an dem Träger-Teil 17 geschwenkt. Dies ist vorteilhafterweise durch die Betätigung des Hebels 43 manuell und insbesondere ohne Verwendung eines Werkzeugs möglich.

In der Entriegelungs-Position wird die Träger-Platte 21 an dem Gehäuse 3 des Waschaggregats 2 durch das Befestigungs-Element 33 freigegeben. Das bedeutet, dass in einer vormontierten Anordnung der Anlenk-Vorrichtung 14, wie in Fig. 2 dargestellt, diese Anlenk-Vorrichtung 14 in eine dafür vorgesehene Ausnehmung in dem Gehäuse 3 des Waschaggregats 2 eingesetzt werden kann. In der Entriegelungs-Position ist die Halte-Platte 38 des Verriegelungs-Teils und damit die Zapfen-Klammer 39 beabstandet von dem Zapfen 24 angeordnet.

Während der Schwenk-Bewegung des Verriegelungs-Teils 18 an dem Träger-Teil 17 kommt es zunächst zu einem Anliegen der Zapfen-Klammer 39 im Bereich der Öffnung des "C". Da die Öffnungsweite W der Zapfen-Klammer 39 kleiner ist als der Zapfen-Durchmesser D_{Z} und aufgrund der elastischen Materialeigenschaften des Materials, aus dem das Verriegelungs-Teil 18 hergestellt ist, kann die Zapfen-Klammer 39 auf den Zapfen 24 aufgeschnappt werden. Gleichzeitig wird das erste Rast-Element 40 im Wesentlichen radial bezüglich der Zapfen-Längsachse 23 in die schlitzförmige, erste Rast-Ausnehmung 41 eingeführt. Das Einführen des ersten Rast-Elements 40 in die erste Rast-Ausnehmung 41 ist durch die Einführflanke 42 erleichtert. Das erste Rast-Element 40 ist derart an dem Rundabschnitt 57 positioniert, dass die Kontaktfläche 58 entlang der Verriegelungs-Schwenkachse 19 oberhalb einer oberen, parallel zur Zapfen-Längsachse 23 orientierten Gegenfläche 60 angeordnet ist. Bei dem Einführen des ersten Rast-Elements 40 in die erste Rast-Ausnehmung 41 des Zapfens 24 liegt die Kontaktfläche 58 an der Gegenfläche 60 an. Die Kontaktfläche 58 drückt die Gegenfläche 60 nach oben, sodass der Zapfen 24 um die Zapfen-Längsachse 23 im Uhrzeigersinn gemäß der Darstellung in Fig. 2 verdreht wird. Der Zapfen 24 wird gegen den Rundabschnitt 57 des "C" gedrückt.

Das bedeutet, dass beim Verriegeln des Verriegelungs-Teils 18 an dem Träger-Teil 17 der Zapfen 24 an dem Rundabschnitt 57 verklemmt wird. Dadurch ist die Stabilität der Anlenk-Vorrichtung 14 insgesamt erhöht. Gegenüber Beanspruchungen der Verriegelungs-Schwenkachse 19 weist die Anlenk-Vorrichtung 14 dadurch eine erhöhte Stabilität auf. Insbesondere ist es nicht erforderlich, dass derartige Beanspruchungen ausschließlich von der Öffnung des "C" aufgenommen werden müssen. Dadurch ergibt sich eine zusätzliche Sicherung des Zapfens 24 in der Zapfen-Klammer 39.

Die Halte-Platte 38 des Verriegelungs-Teils 18 und die Träger-Wand 22 des Träger-Teils 17 sind in der Verriegelungs-Position parallel zueinander und jeweils senkrecht zur Zapfen-Längsachse 23 angeordnet. Zwischen der Träger-Wand 22 und der Halte-Platte 38 ist der Reibungs-Dämpfer 9 mit der Anlenk-Öffnung 12 an der Anlenk-Vorrichtung 14 befestigt. Sowohl die Halte-Platte 38 als auch die Träger-Wand 22 gewährleisten eine axiale Sicherung des Reibungs-Dämpfers 9 an dem Zapfen 24. Gleichzeitig bewirkt die Verlagerung des Verriegelungs-Teils 18, dass das zweite Rast-Element 49 in die dafür vorgesehene zweite Rast-Ausnehmung 27 einschnappt. Dabei kommt der Rast-Vorsprung 50 des zweiten Rast-Elements 49 zunächst im Bereich der Einführ-Schräge 51 an der Träger-Platte 21 und insbesondere an der daran vorgesehenen abgeflachten Kante 54 in Kontakt. In Folge der Schwenkbewegung des Verriegelungs-Teils 18 und der Tatsache, dass das zweite Rast-Element 49 um das Feder-Gelenk 53 als Rast-Zunge 52 ausgeführt ist, wird das zweite Rast-Element 49 nach unten, d. h. von der Träger-Platte 21 weg gedrückt. Nach Abschluss der Schwenkbewegung kann das zweite Rast-Element 49 mit dem Rast-Vorsprung 50 in die dafür vorgesehene Rast-Ausnehmung 27 eingreifen.

In der Verriegelungs-Position der Anlenk-Vorrichtung 14 ist das Verriegelungs-Teil 18 an dem Träger-Teil 17 sicher befestigt. Dies wird insbesondere durch die an dem Zapfen 24 gehaltene Zapfen-Klammer 39, das in die erste Rast-Ausnehmung 41 eingerastete erste Rast-Element 40 sowie das in die zweite Rast-Ausnehmung 27 eingerastete zweite Rast-Element 49 gewährleistet. Die Anlenk-Vorrichtung 14 weist also ein mehrfach sicherndes Befestigungssystem auf.

Weiterhin ist die Anlenk-Vorrichtung 14 in der Verriegelungs-Position sicher an dem Gehäuse 3 des Waschaggregats 2 gehalten. Wie insbesondere aus Fig. 5 hervorgeht, ist das Befestigungs-Element 33 mit den Bajonett-Stegen 47 derart an dem Gehäuse 3 angeordnet, dass die Stege seitlich an der Ausnehmung in dem Gehäuse 3 überstehen. Die Bajonett-Stege 47 hintergreifen die Ausnehmung des Gehäuses 3 und bewirken somit eine axiale Sicherung der Anlenk-Vorrichtung 14 entlang der Verriegelungs-Schwenkachse 19. Der Bajonett-Bolzen 33 kann mit den Bajonett-Stegen 47 insbesondere derart ausgeführt sein, dass ein parallel zur Bolzen-Längsachse 34 gerichteter Abstand von einer Unterseite 56 eines Bajonett-Steges 47 zu der Oberseite 36 der Dreh-Platte 35 kleiner ist als die Summe der Wandstärken des Gehäuses 3 des Waschaggregats 2 und der Träger-Platte 21 des Träger-Teils 17. In diesem Fall ist die Befestigung der Anlenk-Vorrichtung 14 an dem Waschaggregat 2 zusätzlich erhöht, da in der Verriegelungs-Position das Gehäuse 3 und die Träger-Platte 21 zwischen den Bajonett-Stegen 47 und der Dreh-Platte 35 geklemmt sind (vgl. Fig. 5). Das bedeutet, dass in der Verriegelungs-Position von dem Gehäuse 3 und der Träger-Platte 21 eine passive Reaktionskraft auf die Unterseite 56 des Bajonett-Bolzens 33 bzw. auf die Oberseite 36 der Dreh-Platte 35 wirkt. Der Bajonett-Drehverschluss ist selbsthemmend ausgeführt.

## Patentansprüche

1. Anlenk-Vorrichtung zum Anlenken eines mindestens eine Anlenk-Öffnung aufweisenden Reibungs-Dämpfers an einem Waschaggregat oder an einem Maschinengestell einer Waschmaschine, wobei die Anlenk-Vorrichtung (14) umfasst
a. ein Träger-Teil (17) zum Tragen des Reibungs-Dämpfers (9), wobei das Träger-Teil (17) umfasst
i. eine Träger-Platte (21) zum Anlegen an das Waschaggregat (2) oder an das Maschinengestell (4),
ii. eine sich quer von der Träger-Platte (21) weg erstreckende Träger-Wand (22),
iii. einen eine Zapfen-Längsachse (23) aufweisenden Zapfen (24) zur Aufnahme in der mindestens einen Anlenk-Öffnung (12), wobei sich der Zapfen (24) quer von der Träger-Wand (22) weg erstreckt, **gekennzeichnet durch**
b. ein an dem Träger-Teil (17) um eine Verriegelungs-Schwenkachse (19) zwischen einer Verriegelungs-Position und einer Entriegelungs-Position schwenkbar angelenktes Verriegelungs-Teil (18) zum Verriegeln des Reibungs-Dämpfers (9) an dem Träger-Teil (17), wobei das Verriegelungs-Teil (18) ein Befestigungs-Element (33) umfasst,
c. wobei in der Verriegelungs-Position die Träger-Platte (21) an dem Waschaggregat (2) oder an dem Maschinengestell (4) mittels dem Befestigungs-Element (33) befestigt ist, und
d. wobei in der Entriegelungs-Position die Träger-Platte (21) an dem Waschaggregat (2) oder an dem Maschinengestell (4) **durch** das Befestigungs-Element (33) freigegeben ist.

2. Anlenk-Vorrichtung nach Anspruch 1, **gekennzeichnet durch** einen an dem Verriegelungs-Teil (18) angeformten Hebel (43) zum Schwenken des Verriegelungs-Teils (18), wobei sich der Hebel (43) quer, insbesondere senkrecht, zur Verriegelungs-Schwenkachse (19) erstreckt.

3. Anlenk-Vorrichtung nach einem der vorstehenden Ansprüche, **dadurch gekennzeichnet, dass** das Verriegelungs-Teil (18) einstückig aus einem ersten Material, insbesondere aus Kunststoff hergestellt ist.

4. Anlenk-Vorrichtung nach einem der vorstehenden Ansprüche, **dadurch gekennzeichnet, dass** das Träger-Teil (17) einstückig aus einem zweiten Material, insbesondere aus Kunststoff hergestellt ist.

5. Anlenk-Vorrichtung nach einem der vorstehenden Ansprüche, **dadurch gekennzeichnet, dass** das Verriegelungs-Teil (18) und das Träger-Teil (17) aus verschiedenen Materialien hergestellt sind, insbesondere aus Polypropylen (PP) und Polyoxymethylen (POM).

6. Anlenk-Vorrichtung nach einem der vorstehenden Ansprüche, **gekennzeichnet durch** mindestens einen an der Träger-Platte (21) angeordneten Halte-Vorsprung (26).

7. Anlenk-Vorrichtung nach einem der vorstehenden Ansprüche, **dadurch gekennzeichnet, dass** das Befestigungs-Element (33) in einer in der Träger-Platte (21) vorgesehenen Ausnehmung (29) angeordnet ist.

8. Anlenk-Vorrichtung nach Anspruch 7, **dadurch gekennzeichnet, dass** das Befestigungs-Element (33) eine Axial-Sicherung (55) zum axialen Sichern entlang einer zu der Träger-Platte (21) senkrecht orientierten Richtung (34) aufweist.

9. Anlenk-Vorrichtung nach einem der vorstehenden Ansprüche, **gekennzeichnet durch** mindestens ein Rast-Element (40, 49) zum Verrasten des Verriegelungs-Teils (18) an dem Träger-Teil (17) in der Verriegelungs-Position.

10. Anlenk-Vorrichtung nach Anspruch 9, **gekennzeichnet durch** ein, insbesondere an einer Zapfen-Klammer (39) angeordnetes, erstes Rast-Element (40), wobei das erste Rast-Element (40) in der Verriegelungs-Position in einer korrespondierenden, in dem Zapfen (24) angeordneten ersten Rast-Ausnehmung (41) rastend angeordnet ist.

11. Anlenk-Vorrichtung nach Anspruch 9 oder 10, **gekennzeichnet durch** ein zweites Rast-Element (49), wobei das zweite Rast-Element (49) in der Verriegelungs-Position in einer korrespondierenden, in der Träger-Platte (21) angeordneten zweiten Rast-Ausnehmung (27) angeordnet ist.

12. Anlenk-Vorrichtung nach Anspruch 11, **dadurch gekennzeichnet, dass** das zweite Rast-Element (49) als Rast-Vorsprung (50) an einer federnden Rast-Zunge (52) ausgeführt ist, die insbesondere in der Verriegelungs-Position manuell betätigbar ist.

13. Anlenk-Vorrichtung nach einem der vorstehenden Ansprüche, **gekennzeichnet durch** eine exzentrisch zur Verriegelungs-Schwenkachse (19) angeordnete Halte-Platte (38) mit einer Zapfen-Klammer (39), wobei die Zapfen-Klammer (39) in der Verriegelungs-Position den Zapfen (24) zumindest abschnittsweise umgreift und wobei die Zapfen-Klammer (39) in der Entriegelungs-Position beabstandet von dem Zapfen (24) angeordnet ist.

14. Anlenk-Vorrichtung nach einem der vorstehenden Ansprüche, **gekennzeichnet durch** mindestens eine an einer der Träger-Platte (21) zugewandten Unterseite (56) des Befestigungs-Elements (33) angebrachte Einführ-Schräge (48).

15. Anlenk-Vorrichtung nach einem der vorstehenden Ansprüche, **dadurch gekennzeichnet, dass** das Befestigungs-Element ein eine Bolzen-Längsachse (34) aufweisender Bajonett-Bolzen (33) ist.

## Claims

1. Coupling device for coupling a friction damper comprising at least one coupling opening onto a washing unit or a machine frame of a washing machine, wherein the coupling device (14) comprises
a. a support part (17) for supporting the friction damper (9), wherein the support part (17) comprises
i. a support plate (21) for putting on the washing unit (2) or machine frame (4),
ii. a support wall (22) extending away transversely from the support plate (21),
iii. a pin (24) having a pin longitudinal axis (23) for mounting in the at least one coupling opening (12), wherein the pin (24) extends away transversely from the support wall (22), **characterized by**
b. a locking part (18) coupled pivotably to the support part (17) about a locking pivot axis (19) between a locking position and an unlocking position for locking the friction damper (9) onto the support part (17), wherein the locking part (18) comprises a fastening element (33),
c. wherein in the locking position the support plate (21) is secured onto the washing unit (2) or onto the machine frame (4) by means of the fastening element (33), and
d. wherein in the unlocking position the support plate (21) on the washing unit (2) or on the machine frame (4) is released by the fastening element (33).

2. Coupling device according to claim 1, **characterized by** a lever (43) formed on the locking part (18) for pivoting the locking part (18), wherein the lever (43) extends transversely, in particular perpendicularly, to the locking pivot axis (19).

3. Coupling device according to one of the preceding claims, **characterized in that** the locking part (18) is made in one piece from a first material, in particular plastic.

4. Coupling device according to one of the preceding claims, **characterized in that** the support part (17) is made in one piece from a second material, in particular plastic.

5. Coupling device according to one of the preceding claims, **characterized in that** the locking part (18) and the support part (17) are made from different materials, in particular from polypropylene (PP) and polyoxymethylene (POM).

6. Coupling device according to one of the preceding claims, **characterized by** at least one holding projection (26) arranged on the support plate (21).

7. Coupling device according to one of the preceding claims, **characterized in that** the fastening element (33) is arranged in a recess (29) provided in the support plate (21).

8. Coupling device according to claim 7, **characterized in that** the fastening element (33) comprises an axial fastening (55) for axially securing along a direction (34) oriented perpendicular to the support plate (21).

9. Coupling device according to one of the preceding claims, **characterized by** at least one latching element (40, 49) for latching the locking part (18) onto the support part (17) in the locking position.

10. Coupling device according to claim 9, **characterized by** a first latching element (40) arranged in particular on a pin clamp (39), wherein the first latching element (40) in the locking position is arranged latched in a corresponding first latching recess (41) arranged in the pin (24).

11. Coupling device according to claim 9 or 10, **characterized by** a second latching element (49), wherein the second latching element (49) in the locking position is arranged in a corresponding second latching recess (27) arranged in the support plate (21).

12. Coupling device according to claim 11, **characterized in that** the second latching element (49) is configured as a latching projection (50) on a resilient latching tongue (52), which can be activated manually in particular in the locking position.

13. Coupling device according to one of the preceding claims, **characterized by** a holding plate (38) arranged eccentrically to the locking pivot axis (19) with a pin clamp (39), wherein the pin clamp (39) in the locking position encompasses the pin (24) at least in sections, and wherein the pin clamp (39) in the unlocking position is arranged spaced apart from the pin (24).

14. Coupling device according to one of the preceding claims, **characterized by** at least one insertion chamfer (48) arranged on a lower side (56) of the fastening element (33) facing towards the support plate (21).

15. Coupling device according to one of the preceding claims, **characterized in that** the fastening element is a bayonet bolt (33) having a bolt longitudinal axis (34).

## Revendications

1. Dispositif d'articulation pour articuler un amortisseur de frottement présentant au moins une ouverture d'articulation au niveau d'une unité de lavage ou sur un bâti de machine d'une machine à laver, le dispositif d'articulation (14) comprenant
a. une partie support (17) pour porter l'amortisseur de frottement (9), la partie support (17) comportant
i. un plateau support (21) destiné à être mis sur l'unité de lavage ou sur le bâti (4) de la machine,
ii. une paroi support (22) s'étendant perpendiculairement en partant du plateau support (21),
iii. un tourillon (24) présentant un axe longitudinal (23) de tourillon pour l'admission dans au moins une ouverture d'articulation (12), le tourillon (24) s'étendant perpendiculairement à partir de la paroi support (22), **caractérisé par**
b. une pièce de verrouillage (18), articulée sur la partie support (17), pouvant pivoter autour d'un axe de pivotement (19) de verrouillage entre une position de verrouillage et une position de déverrouillage, pour verrouiller l'amortisseur de frottement (9) sur la partie support (17), la pièce de verrouillage (18) comprenant un élément de fixation (33),
c. le plateau support (21) étant fixé sur l'unité de lavage (2) ou sur le bâti (4) de la machine au moyen de l'élément de fixation (33) dans la position de verrouillage, et
d. le plateau support (21) étant libéré de l'unité de lavage (2) ou du bâti (4) de la machine par l'élément de fixation (33) dans la position de déverrouillage.

2. Dispositif d'articulation selon la revendication 1, **caractérisé par** un levier (43), rapporté sur la pièce de verrouillage (18), destiné au pivotement de la pièce de verrouillage (18), le levier (43) s'étendant perpendiculairement, en particulier, verticalement, par rapport à l'axe de pivotement (19) de verrouillage.

3. Dispositif d'articulation selon 1"une des revendications précédentes, **caractérisé en ce que** la pièce de verrouillage (18) est fabriquée d'une seule pièce constituée d'un premier matériau, notamment, constituée en matière plastique.

4. Dispositif d'articulation selon l'une des revendications précédentes, **caractérisé en ce que** la partie support (17) est fabriquée d'une seule pièce constituée d'un deuxième matériau, notamment, constituée en matière plastique.

5. Dispositif d'articulation selon l'une des revendications précédentes, **caractérisé en ce que** la pièce de verrouillage (18) et la partie support (17) sont fabriquées dans des matériaux différents, notamment, en polypropylène (PP) et en polyoxyméthylène (POM).

6. Dispositif d'articulation selon l'une des revendications précédentes, **caractérisé par** au moins une saillie de maintien (26) disposée sur le plateau support (21).

7. Dispositif d'articulation selon l'une des revendications précédentes, **caractérisé en ce que** l'élément de fixation (33) est disposé dans un évidement (29) prévu dans le plateau support (21).

8. Dispositif d'articulation selon la revendication 7, **caractérisé en ce que** l'élément de fixation (33) présente une sécurité axiale (55) pour la sécurisation axiale le long d'une direction (34) orientée perpendiculairement par rapport au plateau support (21).

9. Dispositif d'articulation selon l'une des revendications précédentes, **caractérisé par** un élément de butée (40, 49) pour l'arrêt de la pièce de verrouillage (18) sur la partie support (17) dans la position de verrouillage.

10. Dispositif d'articulation selon la revendication 9, **caractérisé par** un premier élément de butée (40) disposé en particulier sur une attache (39) de tourillon, le premier élément de butée (40) étant disposé en butée dans un premier évidement (41) de butée correspondant, disposé dans le tourillon (24) dans la position de verrouillage.

11. Dispositif d'articulation selon les revendications 9 ou 10, **caractérisé par** un deuxième élément de butée (49), le deuxième élément de butée (49) étant disposé dans un deuxième évidement (27) de butée correspondant, disposé dans le plateau support (21) dans la position de verrouillage.

12. Dispositif d'articulation selon la revendication 11, **caractérisé en ce que** le deuxième élément de butée (49) est conçu sous la forme d'une saillie de butée (50) sur une languette de butée (52) faisant ressort, qui peut être actionnée manuellement en particulier dans la position de verrouillage.

13. Dispositif d'articulation selon l'une des revendications précédentes, **caractérisé par** un plateau de maintien (38) disposé de manière excentrique par rapport à l'axe de pivotement (19) de verrouillage avec une attache de tourillon (39), l'attache de tourillon (39) entourant au moins partiellement le tourillon (24) dans la position de verrouillage et l'attache de tourillon (39) étant disposée espacée du tourillon (24) dans la position de déverrouillage.

14. Dispositif d'articulation selon l'une des revendications précédentes, **caractérisé par** au moins un biseautage d'insertion (48) rapporté sur une face inférieure (56) de l'élément de fixation (33) orientée vers le plateau support (21).

15. Dispositif d'articulation selon l'une des revendications précédentes, **caractérisé en ce que** l'élément de fixation est un boulon en baïonnette (33) présentant un axe longitudinal de boulon (34).
